# EUROPEAN PATENT SPECIFICATION

(11) **EP 0 676 403 B1**
(45) Date of publication and mention of the grant of the patent: **15.09.1999**
(21) Application number: 95105302.4
(22) Date of filing: 07.04.1995
(51) Int. Cl.: C07F 7/18, C08G 18/10, C09K 3/10

(54) **Arylaminosilane end-capped urethane sealants**
Arylaminosilane und deren Verwendung als Endgruppe in Urethanabdichtungsmassen
Arylaminosilanes et leur utilisation comme groupes terminaux d'uréthanes utilisées comme mastics

(30) Priority: 08.04.1994 US 224963
(43) Date of publication of application: 11.10.1995
(73) Proprietor: WITCO CORPORATION, Greenwich, Connecticut 06831-2559 (US)
(72) Inventor: Feng, Ta-Min, Ph.D., Morristown, NJ 07960 (US); Magrum, Glen R., Ashland, OH 44805 (US)
(74) Representative: Wibbelmann, Jobst, Dr., Dipl.-Chem.

(56) References cited:
- US-A- 4 474 933

## Description

This invention relates to new arylaminoisobutylsilanes, arylaminoisobutylsilane end-capped urethane polymers, and sealants prepared with them.

In the past, urethane prepolymers have been modified to improve or modulate their properties by end-capping some or all of the isocyanate groups with a variety of organosilanes. However, silane end-capped urethanes, typically employed as sealants, frequently exhibit insufficient elongation and flexibility to be used in applications requiring considerable stretching and compression. There is a need for improved modified urethane polymers and sealant compositions containing such polymers which, upon curing, form sealants with improved elongation, improved flexibility, and a lower modulus of elasticity.

Although several preparations of aminoalkylsilanes have been published previously, the production of arylaminoisobutylsilanes have not been heretofore disclosed. Compositions containing arylaminoalkylsilanes and polymers obtained therefrom were disclosed in the Can. Pat. No. 688,662 to Bailey and Pike, where the alkyl group was -(CH₂)ₙ- and contained no branching. The compounds were disclosed as useful as intermediates in the production of silicon-containing dyestuffs that could be used for dyeing glass cloth as well as more usual natural and synthetic fibers.

In U.S. Pat. No. 2,971,864, Speier disclosed aminoalkylsilanes and methods of dyeing glass therewith. A number of trialkoxymonoorganosilanes in which the organo radical was a monovalent polyamino hydrocarbon radical having a carbon to nitrogen ratio of less than 6:1 were disclosed, including 3-[N-(2-aminoethyl)amino]isobutyltrimethoxysilane, H₂NCH₂CH₂NHCH₂CH(CH₃) CH₂Si(OCH₃)₃. Pike and Morehouse, in U.S. Pat. No. 3,033,815, disclosed a similar structure, 3-[N-(2-aminoethyl) amino] isobutyldiethoxymethylsilane, useful as a sizing for fibrous materials, particularly fibrous glass materials employed in combination with thermosetting resins. In U.S. Pat. No. 3,046,295, Lisanke and Bailey disclosed a preparation of 3-[(N-2-aminoethyl)-[(aminoethyl]isobutyltriethoxysilane among other compounds disclosed as useful as sizing agents for glass cloth used in the preparation of glass cloth laminates. Lisanke and Pike, in Ger. Pat. No. 1,152,095, disclosed the preparation of 3-[(N-2-aminoethyl)amino]isobutyltriethoxysilane for use in strengthening glass and pigment binders in dyeing glass fibers.

As mentioned above, urethane prepolymers have been modified to modulate their functionality by end-capping some or all of the isocyanate groups with a variety of organosilanes to yield silane end-capped urethanes which exhibit minimal or no isocyanate. For example, in U.S. Pat. No. 3,632,557 to Brode and Conte, the complete end-capping of polyurethane prepolymers with primary and secondary aliphatic aminosilanes was disclosed, yielding silicon-terminated polymers that were curable at room temperature. In U.S. Pat. No. 3,979,344, Bryant and Weis disclosed that a small amount of 3-(N-2-aminoethyl)aminopropyltrimethoxysilane blended with vulcanizable silicon-terminated polyurethane polymers yielded room-temperature-curable silicon-terminated sealant compositions having improved cure speeds, useful in metal and glass primer compositions. Bryant, *et al.,* in U.S. Pat. No. 4,222,925, disclosed the same composition as that set out in U.S. Pat. No. 3,979,344, with the addition of a high strength reinforcing carbon black filler, and, optionally, a moisture-curing catalyst such as dibutyltin diacetate.

In U.S. Pat. No. 4,374,237 to Berger, *et al.,* curable isocyanate-terminated polyurethane prepolymers having at least part of the terminal isocyanate groups reacted with a secondary amine-containing silane monomer having two trialkoxy silane groups were described; the compounds were disclosed as useful in sealant compositions having enhanced wet adhesion. Huber, *et al.,* in U.S. Pat. No. 4,474,933, disclosed that crosslinkable urethane resin mixtures made from fluid polymers containing hydroxyl groups partially capped with silanes of the formula

R₁-NH-R₂-Si (R₃)ₙ(OR₄)₃₋ₙ

where R₁ = H or alkyl, cycloalkyl, aryl, aralkyl, or the moiety -R₂-Si(R₃)ₙ(OR₄)₃₋ₙ; R₂ = C₁-C₅ alkylene; R₃ = methyl or ethyl; R₄ = alkyl or alkoxyolkylene of up to 5 carbon atoms; and n = 0, 1, or 2, could be processed in a liquid state at room temperature or a moderately elevated temperature, applied as a coating, and then transformed by crosslinking to a state of substantially higher consistency, thus minimizing organic solvent use.

Other silane end-capped urethane prepolymers and sealants were disclosed in U.S. Pat. No. 3,627,722 to Seiter, which described polyurethane sealants such as alkylaminoalkyltrialkoxysilanes, mercaptoalkyltrialkoxysilanes, and arylaminoalkyltrialkoxysilanes containing a significant percentage, but preferably less than all, terminal isocyanate groups end-blocked with -Si(OR)₃, where R was a lower alkyl; U.S. Pat. No. 4,067,844 to Barron and Turk, which disclosed curable polyurethane polymers in which a portion of the NCO terminations are reacted with certain amino silanes (or with the residual on reaction of a mercaptosilane with a monoepoxide, or with the residual on reaction of an epoxysilane with a secondary amine); U.S. Pat. No. 4,345,053 to Rizk, *et al*., which disclosed a moisture-curable silicon-terminated polymer prepared by reacting a polyurethane prepolymer having terminal active hydrogen atoms with an isocyanato organosilane having a terminal isocyanate group and at least one hydrolyzable alkoxy group bonded to silicon; and U.S. Pat. No. 4,625,012 to Rizk and Hsieh, which disclosed a moisture-curable polyurethane polymer having terminal isocyanate groups and silane groups having at least one hydrolyzable alkoxy group bonded to silicon, in which the silane groups may be pendant to the chain.

Silane end-capped urethane sealants frequently exhibit insufficient elongation and flexibility to be useful in applications requiring considerable stretching and compression. To overcome these problems, U.S. Pat. No. 4,645,816 to Pohl and Osterholtz described a novel class of room temperature, moisture-curable, silane-terminated polyurethane polymers bearing terminal isocyanate groups reacted with a silane monomer having one dialkoxy silane group and an organo-functional group with at least one active hydrogen. The polymers were crosslinked to produce elastomeric polymers with improved elongation and flexibility.

It would be useful to have silane end-capped urethane sealants that exhibit superior elongation, elasticity, and flexibility.

### Disclosure of the Invention

It is an object of the invention to provide a new class of silane-end-capped, particularly silane-terminated, urethane polymers.

It is another and more specific object of the invention to provide room-temperature-curable urethane polymers end-capped with silanes and sealant compositions containing such polymers that exhibit improved elongation, improved flexibility, and a lower modulus of elasticity.

These and other objects are achieved by the present invention, which provides novel arylaminoisobutylsilane compound of the formula

Ar-NHCH₂CH(CH₃) CH₂Si(CH₃) (OR)₂

wherein Ar is an aryl group such as phenyl, napthyl, tolyl, styryl, and mixtures thereof, and R is a C₁-C₆, preferably a C₁ to C₄, alkyl group. In some preferred embodiments, the Ar group is a phenyl and the R group is a methyl or ethyl group. Exemplary silanes include, but are not limited to, N-phenylaminoisobutyldimethoxymethylsilane and N -phenylaminoisobutylmethyldiethoxysilane.

Vulcanizable arylaminoalkylsilane end-capped polyurethane polymers are prepared by reacting an isocyanate-containing polyurethane prepolymer (having either pendant and/or terminal isocyanate groups) with the novel arylaminoisobutylsilane compounds. Prepolymers are prepared by reacting an organic di- or poly-isocyanate with a polyol or a combination of polyols in the presence of a catalyst. Typically, the isocyanate is a diisocyanate such as, for example, 2,4-toluene diisocyanate, 2,6-toluene diisocyanate, 4,4'-diphenylmethane diisocyanate, isophorone diisocyanate, and dicyclohexylmethane-4,4'diisocyanate; 4,4'-diphenylmethane diisocyanate is employed in one embodiment.

Triisocyanates such as the trifunctional reaction product of three moles of hexamethylene diisocyanate and one mole of water sold under the trademark Desmodur N®. (obtained from Miles, Inc.) may also be incorporated. For example, in one embodiment, Desmodur N®-100 having an equivalent weight of about 191, an NCO content of about 22%, and a viscosity of 8,000 to 15,000 mPa at 20°C is employed. Other embodiments use Desmodur N®-75 (with an equivalent weight of about 255, an NCO content of about 16.5%, and a viscosity of about 100 to 250 mPa at 20°c), Desmodur N®-3200 (with an equivalent weight of about 181, an NCO content of about 23.1%, and a viscosity of about 2,000 to 3,500 mPa at 20°C), Desmodur N®-3300 (with an equivalent weight of about 195, an NCO content of about 21.5%, and a viscosity of about 3,000 to 7,000 at 20°C) and Desmodur N®-3390 (with an equivalent weight of 216, an NCO content of about 19.4%, and a viscosity of about 500 to 1,500 mPa at 20°C), or a mixture thereof.

Example polyols include polyoxyalkylene diols, polyoxyalkylene triols, polytetramethylene glycols, polycaprolactone diols, and polycaprolactone triols, preferably having a molecular weight between 500 and 6000; polypropylene glycols having an equivalent weight of between about 1000 and 2000 are employed in some embodiments. Catalysts for the reaction include, for example, dialkyltin dicarboxylates, tertiary amines, and stannous salts of carboxylic acids; dibutyltin dilaurate is employed in one embodiment.

By varying the order of addition and stoichiometry as known in the art, prepolymers may be prepared with either pendant isocyanate groups, terminal isocyanate groups, or both pendant and terminal isocyanate groups. For instance, a triol can be reacted with excess isocyanate to give triisocyanate. This triisocyanate may be incorporated in the reaction mixture to obtain pendant isocyanate groups. Thus, as used herein, the term "end-capped" polymers includes those prepared by reacting an isocyanate-containing polyurethane prepolymer with a silane, and the isocyanate groups may be pendant, terminal, or a mixture thereof. Isocyanate-terminated polyurethane prepolymers are employed in some embodiments.

Sealants exhibiting improved elongation, improved flexibility and a lower modulus of elasticity are prepared by mixing and heating arylaminosilane end-capped urethane polymers with a filler such as calcium carbonate, clay, talc, or fumed silica and a catalyst. A typical calcium carbonate filler has a particle size of from about 0.05 to about 10 microns; particle sizes of from about 0.07 to about 1 micron are employed in some embodiments. Preferred catalysts are those mentioned above, i.e., dialkyltin dicarboxylates, tertiary amines, and stannous salts of carboxylic acids. Dibutyltin dilaurate is employed in one embodiment.

Processes for producing vulcanizable, arylaminosilane end-capped urethane polymers are also disclosed.

### Detailed Description of the Invention

This invention is based upon the finding that dialkoxyarylaminoisobutylsilane-end-capped urethane polymers and sealants prepared with them exhibit an improved elongation and flexibility with a low modulus of elasticity and faster cures than sealants made with conventional aminosilane-end-capped urethane polymers.

The silanes of this invention are novel arylaminoisobutylsilanes of the formula

Ar-NHCH₂CH (CH₃) CH₂Si (CH₃) (OR)₂

where Ar is any aryl group such as phenyl, naphthyl, tolyl, styryl, and the like, and mixtures thereof, and R is C₁-C₆, preferably a C₁ to C₄, alkyl group. Representative silanes are 3-(N-phenyl)aminoisobutylmethyldimeth-oxysilane, which has the following structure:

C₆H₅NHCH₂CH (CH₃) CH₂Si (CH₃) (OCH₃)₂

and 3-(N-phenyl)-(N-phenyl)aminoisobutylmethyldiethoxysilane, which has the following structure:

C₆H₅NHCH₂CH (CH₃)CH₂Si (CH₃) (OCH₂CH₃)₂.

These new silanes are prepared by reaction of 3-chloroisobutylmethyldialkoxysilanes with arylamines at elevated temperatures. Example syntheses are given hereafter.

By "aryl group" is meant any group obtained by removing a hydrogen atom from an aromatic compound, i.e., an arene having one or more unsaturated carbon rings. Typical aryl groups useful in the practice of the invention have an aromatic backbone of 6 (based on benzene) or 10 (based on naphthalene) carbon atoms. Example aryl groups are phenyl, napthyl, tolyl, styryl and mixtures thereof. Phenyl groups are preferred in some embodiments.

Vulcanizable arylaminoalkylsilane end-capped polyurethane polymers are prepared by reacting an isocyanate-containing polyurethane prepolymer with the novel arylaminosilanes of this invention. The isocyanate groups can be pendant, terminal, or a combination of pendant and terminal.

Typical average molecular weights of the prepolymers, as determined by Gel Permeation Chromatography (GPC), vary between about 1.0 to 5.0 x 10⁴. Typical average molecular numbers vary between about 0.5 to 4.5 x 10⁴; thus, typical ratios of average molecular weight to molecular numbers vary between about 1.05 to 10.

Isocyanate-terminated polyurethane prepolymers, useful in the present invention, are prepared by reacting an excess of organic di- or poly-isocyanate with a polyol or a combination of polyols in the presence of a small amount of catalyst. The reaction temperature is typically in the range of 60° to 90°C; the reaction time is about 2 to 4 hours. Example preparations are set out in the next section.

Isocyanate-pendant materials may be prepared by incorporation of a triisocyanate as disclosed by Rizk and Hsieh, cited above.

Suitable organic di- and multifunctional-isocyanates include diisocyanates such as, for example, 2,4toluene diisocyanate, 2,6-toluene diisocyanate, 4,4'diphenylmethane diisocyanate, isophorone diisocyanate, dicyclohexylmethane-4,4'-diisocyanate, Desmodur N® triisocyanates, and the like, and mixtures thereof. A preferred isocyanate functional monomer used in the present invention is 4,4'-diphenylmethane diisocyanate.

In producing the isocyanate-terminated polyurethane prepolymers of the present invention, one or more diols and triols can be employed in the reaction with an organic diisocyanate. Such polyols, which have two or more hydroxyl groups, generally have a molecular weight between about 250 to 12,000, more narrowly between about 500 to 6000, and can be either polyether or polyester polyols. Suitable polyols include polyoxyalkylene diols, polyoxyalkylene triols, polytetramethylene glycols, polycaprolactone diols and triols, and the like. Preferred polyols used in the present invention are polypropylene glycols with a equivalent weights between about 500 and 4000, more narrowly between about 1000 and 2000.

Suitable catalysts used in the preparation of above-mentioned polyurethane prepolymers are dialkyltin dicarboxylates, such as dibutyltin dilaurate and dibutyltin diacetate, tertiary amines, the stannous salts of carboxylic acids, such as stannous octoate and stannous acetate, and the like. A preferred catalyst used in the present invention is dibutyltin dilaurate.

To prepare isocyanate-terminated polyurethane prepolymers useful in this invention, at least a slight mole excess of -NCO equivalents (groups) with respect to the hydroxyl (-OH) equivalents (groups) is employed to terminate the polymer chain with isocyanate groups. The preferred molar ratio of NCO to OH is from about 1.2 to about 4.0, depending on the selection of polyols. Molar ratios between about 1.4 and 2.0 are employed in some embodiments. The equivalent weights of the polyol typically varies from about 500 to 6000.

Vulcanizable arylaminoisobutylsilane end-capped urethane polymers of the present invention are made by reacting one or more arylaminoisobutylsilanes with one or more isocyanate-containing polyurethane prepolymers as described above. An excess of the silane material, typically about 5% to 25%, and preferably about 5% to 10%, should be employed to insure a complete reaction of all the isocyanate terminal groups on the prepolymer and any residual free isocyanate monomer. Preferably, there should be less than 5%, more preferably less than 1%, and even more preferably, essentially 0%, unreacted isocyanate groups.

The reaction is conducted preferably in the absence of moisture and at temperature of about 80° to 90°C with a small amount of catalyst. The reaction is completed when an isocyanate analysis shows zero concentration. Silane-pendant materials may be prepared from isocyanate pendant prepolymers or by incorporation of a stable pre-reacted diisocyanate containing at least one silane structure. An advantage of the invention is that the silylated urethanes are easily prepared and show a controlled and consistent reaction between the silane and the isocyanate.

Sealants are made comprising the silane-end-capped polyurethane polymers, a filler such as clay, talc, fumed silica, or calcium carbonate, and one or more catalysts if desired to speed the reaction. Typically, sealants are prepared by mixing the silane-end-capped polyurethane polymer, a nonreactive filler such as calcium carbonate, and a catalyst and heating, e.g., in a Molteni Planimax GII® mixer at about 40° to 60°C for about 60 to 90 minutes.

Suitable calcium carbonate fillers useful in the invention can be either treated or non-treated in a variety of different particle sizes. Preferred calcium carbonate fillers are the treated materials with a particle size of from about 0.05 and 10 microns; some embodiments employ fillers having a size of from about 0.07 micron to 1 micron. The fillers can comprise up to 100 parts per 100 parts of polymers.

Suitable catalysts are the same as the catalysts mentioned above for the preparation of polyurethane prepolymers. The amount of catalyst used is about 0.1 to 3 parts per 100 parts of polymer. If a slow rate of cure is desired, no catalyst is used.

After mixing, the sealants are typically cured at about 23°C, 50% humidity for 7 days and 37°C, 95% humidity for another 7 days. The physical properties of the cured sealants are then determined by tensile, tear, and elongation tests using American Society for Testing and Materials (A.S.T.M.) Methods D412 and D624.

The vulcanizable polymers of this invention are useful in sealing applications for construction, automotive seams, automotive windshields, or sanitary sealants. The cured polymers of this invention strongly adhere alone or with the aid of a primer to a wide variety of substrates such as concrete, glass, wood, aluminum, steel, plastics, paper, painted surfaces, phosphated metal, galvanized metal, ceramics, and the like, making them especially suited for concrete, glass, or aluminum.

The cured polymers of this invention exhibit a number of desirable properties, such as improved elongation and flexibility, a lower modulus of elasticity, improved elastic recovery (hysteresis), and faster cure when compared to traditional aminosilane terminated urethane polymers, including the dialkoxysilanes described in U.S. Pat. No. 4,645,816, discussed above.

It is an advantage of the invention that sealants prepared using polymers of the invention can exhibit at least 80% recovery after five cycles of stretching and compression. In some embodiments, elongation of at least about 800% to 1000% and a 100% modulus of between about 20% and 40% using A.S.T.M. Method D412 are prepared. (Comparison tests are given in the Examples that follow.) Improved elongation and lower modulus of elasticity can, for example, significantly reduce the stresses on sealants at the interface of the substrate during expansions and contractions of joints, minimizing adhesive failure of the sealants.

### EXAMPLES

The following examples are presented for the purpose of further illustrating and explaining the invention, and are not to be taken as limiting in any regard. Unless otherwise indicated, all parts and percentages are based on the weight of the components at the stage of processing indicated.

### Example 1

In this example, arylaminosilanes of this invention and a polyurethane prepolymer are prepared.

To synthesize 3-(N-phenyl)aminoisobutyldimethoxymethylsilane, 3-chloro-2-methylpropyldimethoxymethylsilane (3chloroisobutyldimethoxymethylsilane) is first prepared by the platinum-catalyzed hydrosilation of methallyl chloride with dichloromethylsilane, followed by reaction of the resulting 3 -chloro-2-methylpropyldichloromethylsilane with methanol.

Into a 1-liter flask, equipped with a heating mantle, mechanical stirrer, addition funnel, thermometer and distillation head and protected with nitrogen, are added 196.5 grams (1.0 mole) of 3-chloro-2-methylpropyldimethoxymethylsilane, 232.8 grams (2.5 moles) of aniline and 0.17 gram of sodium borohydride. The mixture is heated with stirring to 170°C and maintained for 1 hour. At this point, from the addition funnel is added to the heated reaction mixture 216.0 grams (1.0 mole) of 25% sodium methoxide/methanol solution dropwise over 5 hours, while removing methanol via the distillation head at atmospheric pressure. The reaction mixture is cooled to 50°C, diluted with hexane, and filtered to remove sodium chloride. The resulting product solution is vacuum dis-tilled to produce 156.7 grams (0.62 mole, 62% yield, boiling point 160°C at 1 Torr) of 3-(N-phenylamino)-2methylpropyldimethoxymethylsilane.

3-(N-Phenyl)-aminoisobutyldiethoxymethylsilane is prepared by adding 50 grams of 3-(N-phenyl)aminoisobutyldimethoxymethylsilane, 0.5 gram of sodium methoxide (as a 25% solution in methanol), and 100 ml of ethanol to a 250-ml flask. The solution is heated with stirring and the excess ethanol is distilled from the mixture. This process is repeated two additional times. The mixture is vacuum distilled to produce 42 grams of product, confirmed by nuclear magnetic resonance analysis to be 3-(Nphenyl)aminoisobutyldiethoxymethylsilane

An isocyanate prepolymer is next prepared. To a 500-ml reaction vessel equipped with a mechanical stirrer, a heating mantle, a thermometer, a condenser, and a dry nitrogen inlet is charged 28 grams of 4,4'-diphenylmethane diisocyanate (MDI) and 320.8 grams of polypropylene glycol (PPG) with an average molecular weight of 4000 (molar NCO/OH = 1.5). The reaction kettle is heated to 50°C with stirring for about 30 minutes to ensure the melting of MDI. One drop (0.05 gram) of dibutyltin dilaurate is then added to the kettle. The reaction mixture is heated to 80 to 90°C for about 3 hours and then cooled to room temperature to produce the NCO-terminated polyurethane prepolymer. A small sample of the prepolymer so formed is removed and titrated for percent NCO using a standardized solution of dibutylamine in methyl ethyl ketone. The NCO content is found to be 0.7 to 0.9 mole % using this titration method.

### Example 2

This example illustrates the preparation of a silane end-capped polyurethane polymer and a sealant of the invention, and a comparison of the sealant properties with other sealants.

To the NCO-terminated polyurethane prepolymer of Example 1 above is added, with stirring, 17.5 grams of 3(N-phenyl) aminoisobutyldimethoxymethylsilane (Example 1) in a 500-ml reaction vessel. The reaction mixture is heated at 90°C for 3 hours, then cooled to produce the silane-terminated polyurethane polymer. The NCO content is determined to be 0.0% by titration.

To prepare a sealant composition of this invention, 100 parts of the silane-terminated polyurethane polymer so formed and 30 parts of calcium carbonate are charged to a one-pint Molteni Planimax GII® Butterfly Mixer. The mixture is heated to 55°C with nitrogen gas for about one hour, and then one part of dibutyltin dilaurate is added to the mixture, followed by mixing for another 15 minutes. Then the mixer is evacuated to <5 mm Hg pressure for about 10 minutes. Sealant denoted X below is obtained.

For comparison testing, end-capped urethane sealants A, B, C, D, E, F, & G are prepared. The same preparation as described above is used, except that 3-(N-phen-yl)aminopropyltrimethoxysilane is used in sample A instead of 3-(N-phenyl) aminoisobutyldimethoxymethylsilane; 3-aminopropyltrimethoxysilane is used in sample B; 3aminopropyldimethoxymethylsilane is used in sample C; 3mercaptopropyltrimethoxysilane is used in sample D; 3(N-methyl)aminopropyltrimethoxysilane is used in sample E; 3-[N-(n-butyl) ]aminopropyltrimethoxysilane is used in sample F; and 3-(N-cyclohexyl)aminopropyltrimethoxysi-lane is used in sample G.

Performance characteristics of these samples are then compared to those exhibited by the sealant of the invention. Tensile stress, elongation, and 100% modulus are measured for each sample using A.S.T.M. method D412 The results of the physical properties of the silane end capped polyurethane sealant of the invention prepared above (sample X) and comparative samples A, B, C, D, E, F, and G are summarized in Table I.

**Table I**

| Sample | Tensile stress, psi | Elongation, % | 100% modulus |
|---|---|---|---|
| X | 270 | 1,100 | 20 |
| A | 400 | 590 | 64 |
| B | 270 | 390 | 60 |
| C | 290 | 550 | 45 |
| D | 290 | 580 | 46 |
| E | 180 | 300 | 60 |
| F | 210 | 300 | 70 |
| G | 390 | 350 | 90 |

The data shown in above table clearly indicates that the cured sealant compositions containing 3-(N-phenyl)aminoisobutyldimethoxymethylsilane-terminated polyurethane polymers of the present invention (sample X) give superior elasticity and flexibility with higher elongation than other amino- and mercapto-containing silanes (samples A to G). The 3-(N-phenyl)aminoisobutylsilanebased sealant shows better performance in terms of elongation and low modulus compared to other sealants, including the 3-aminopropyldimethoxymethylsilane-based sealant described in U.S. Pat. No. 4,645,816, cited above (sample C).

### Example 3

This example illustrates the preparation of another arylaminosilane end-capped urethane sealant of the invention (denoted Y below) and another comparative sealant (denoted H below). More comparative testing is also carried out.

Following the procedure for making isocyanate prepolymer set out in Example 1, 30 grams of 4,4'-diphenylmethane diisocyanate (MDI) and 258.0 grams of polypropylene glycol (PPG) with an average molecular weight of 4000 (molar NCO/OH = 2.0) is used. The reaction kettle is heated to 50°C with stirring for about 30 minutes to ensure the melting of MDI. One drop (0.005 gram) of dibutyltin dilaurate is then added to the kettle. The reaction mixture is heated to 80° to 90°C for about 3 hours, and then cooled to room temperature to produce the NCO-terminated polyurethane prepolymer. A small sample of the prepolymer so formed is removed and titrated for percent NCO using a standardized solution of dibutylamine in methyl ethyl ketone. The NCO content is about 1.5 mole %.

To this NCO-terminated polyurethane prepolymer is added with stirring 28.6 grams of 3-(N-phenyl)aminoisobu-tyldimethoxymethylsilane in a 500-ml reaction vessel. The reaction mixture is heated at 90°C for 3 hours, then cooled to produce the silane-terminated polyurethane polymer. The NCO content is determined to be 0.0% by titration.

To prepare a sealant composition, 100 parts of the silane-terminated polyurethane polymer so formed and 30 parts of calcium carbonate are charged to a one-pint Molteni Planimax GII® Butterfly Mixer. The mixture is heated to 55°C with nitrogen gas for about one hour, and then one part of dibutyltin dilaurate is added to the mixture, mixing for another 15 minutes. Then the mixer is evacuated to <5 mm Hg pressure for about 10 minutes to obtain sealant Y.

Comparative sealant H is then prepared using the same procedure, adding 18.6 grams of 3-aminopropyldimethoxymethylsilane to the same NCO-terminated polyurethane prepolymer.

The results of the physical properties for silane end-capped urethane sealants X and Y, compared to samples C and H, are set out in Table II below.

**Table II**

| Sample | molar NCO/OH | Viscosity, cps | Tensile strength psi | Elongation, % | 100% Modulus, psi |
|---|---|---|---|---|---|
| Y | 2 | 50,000 | 340 | 850 | 40 |
| X | 1.5 | 150,000 | 210 | 1,100 | 30 |
| H | 2 | 50,000 | 400 | 300 | 60 |
| C | 1.5 | 150,000 | 290 | 550 | 45 |

Table II shows the results of sealant properties as a function of NCO/OH. As the NCO/OH increases, the viscosity of the silane-based urethane polymer decreases. In general, the higher the NCO/OH, the lower the elongation. Sample Y compared to sample X shows a somewhat lower elongation and higher tensile strength due to the use of a different prepolymer (having a molar NCO/OH = 2.0, rather than 1.5). However, comparative sample H (prepared with the same prepolymer used to make Y) exhibits inferior (lower) elongation compared to sample Y. The earlier comparative sample C, although showing more elongation than comparative sample H, is still inferior to Example Y, even when based on a prepolymer having a molar NCO/OH = 1.5.

The above description is for the purpose of teaching the person of ordinary skill in the art how to practice the invention, and it is not intended to detail all of those obvious modifications and variations of which will become apparent to the skilled worker upon reading the description. It is intended, however, that all such obvious modifications and variations be included within the scope of the invention which is defined by the following claims. The claims are meant to cover the claimed elements and steps in any arrangement or sequence which is effective to meet the objectives there intended, unless the context specifically indicates the contrary.

## Claims

1. An arylaminoisobutylsilane compound of the formula
Ar-NHCH₂CH(CH₃)CH₂Si(CH₃)(OR)₂
wherein Ar is an aryl group and R is a C₁-C₆ alkyl group.

2. A compound according to claim 1 wherein the Ar group is selected from the group consisting of phenyl, naphthyl, tolyl, styryl, and mixtures thereof.

3. A compound according to claim 2 wherein the Ar group is a phenyl group.

4. A compound according to claim 1 wherein the R group is a C₁ to C₄ alkyl group.

5. A compound according to claim 3 wherein the R group is selected from the group consisting of a methyl group and an ethyl group.

6. A polymer prepared by reacting an isocyanate-containing polyurethane prepolymer with a compound according to claim 1.

7. A polymer prepared by reacting an isocyanate-terminated polyurethane prepolymer with a compound according to claim 1.

8. A polymer according to claim 6 wherein the prepolymer is prepared by reacting an organic di- or poly-isocyanate with a polyol or a combination of polyols in the presence of a catalyst.

9. A polymer according to claim 8 wherein the isocyanate is a diisocyanate and the polyol has a molecular weight between 500 and 12,000.

10. A polymer according to claim 9 wherein the isocya-nate is selected from the group consisting of 2,4-toluene diisocyanate, 2,6-toluene diisocyanate, 4,4'-diphenylmethane diisocyanate, isophorone diisocyanate, and dicyclohexylmethane-4,4'-diisocyanate.

11. A polymer according to claim 10 wherein the isocyanate is 4,4'-diphenylmethane diisocyanate.

12. A polymer according to claim 9 wherein the polyol is selected from the group consisting of polyoxyalkylene diols, polyoxyalkylene triols, polytetramethylene glycols, polycaprolactone diols, and polycaprolactone triols.

13. A polymer according to claim 11 wherein the polyol is a polypropylene glycol having an equivalent weight of between 250 and 6000.

14. A polymer according to claim 8 wherein the prepolymer is prepared by reacting an organic triisocyanate with a polyol or a combination of polyols in the presence of a catalyst.

15. A polymer according to claim 14 wherein the triisocyanate is the reaction product of three moles of hexamethylene diisocyanate and one mole of water.

16. A polymer according to claim 9 wherein the catalyst is selected from the group consisting of dialkyltin dicarboxylates, tertiary amines, and stannous salts of carboxylic acids.

17. A polymer according to claim 16 wherein the catalyst is dibutyltin dilaurate.

18. A vulcanizable arylaminoalkylsilane end-capped polyurethane polymer comprising the reaction product of an isocyanate-terminated polyurethane prepolymer and a silane of the formula
Ar-NHCH₂CH(CH₃) CH₂Si(CH₃) (OR)₂
wherein Ar is an aryl group selected from the group consisting of phenyl, naphthyl, tolyl, styryl, and mixtures thereof, and R is a C₁-C₆ alkyl group.

19. A polymer according to claim 18 wherein the Ar group is a phenyl group and the R group is a C₁ to C₄ alkyl group.

20. A polymer according to claim 18 wherein the silane is selected from the group consisting of N-phenylaminoisobutyldimethoxymethylsilane and N-phenylaminoisobutylmethyldiethoxysilane.

21. A polymer according to claim 18 wherein the prepolymer is prepared by reacting an organic diisocyanate with a polyol or a combination of polyols having a molecular weight of between 500 and 12,000 in the presence of a catalyst.

22. A polymer according to claim 21 wherein the isocyanate selected from the group consisting of 2,4-toluene diisocyanate, 2,6-toluene diisocyanate, 4,4'-diphenylmethane diisocyanate, isophorone diisocyanate, and dicyclohexylmethane-4,4'-diisocyanate, the polyol is selected from the group consisting of polyoxyalkylene diols, polyoxyalkylene triols, polytetramethylene glycols, polycaprolactone diols, and polycaprolactone triols, and the catalyst is selected from the group consisting of dialkyltin dicarboxylates, tertiary amines, and stannous salts of carboxylic acids.

23. A polymer according to claim 22 wherein the isocyanate is 4,4'-diphenylmethane diisocyanate, the polyol is a polypropylene glycol having an equivalent weight of between 250 and 6000, and the catalyst is dibutyltin dilaurate.

24. A sealant comprising a polymer according to claim 18 and further comprising a calcium carbonate filler and a catalyst.

25. A sealant according to claim 24 wherein the calcium carbonate filler has a particle size of from about 0.05 to about 10 microns.

26. A sealant according to claim 24 wherein the catalyst is selected from the group consisting of dialkyltin dicarboxylates, tertiary amines, and stannous salts of carboxylic acids.

27. A sealant according to claim 26 wherein the catalyst is dibutyltin dilaurate.

28. A process for producing a vulcanizable, arylaminosilane end-capped urethane polymer comprising reacting an isocyanate-containing polyurethane prepolymer and a silane of the formula
Ar-NHCH₂CH(CH₃)CH₂Si(CH₃)(OR)₂
wherein Ar is an aryl group and R is a C₁-C₆ alkyl group.

29. A process according to claim 18 wherein the Ar group is selected from the group consisting of phenyl, naphthyl, tolyl, styryl, and mixtures thereof, and the R group is a C₁ to C₄ alkyl group.

30. A process according to claim 29 wherein the prepolymer is prepared by reacting an organic diisocyanate with a polyol or a combination of polyols having a molecular weight of between 500 and 12,000 in the presence of a catalyst.

31. A process according to claim 30 wherein the isocya-nate is selected from the group consisting of 2,4-toluene diisocyanate, 2,6-toluene diisocyanate, 4,4'-diphenylmethane diisocyanate, isophorone diisocyanate, and dicyclohexylmethane-4,4'-diisocyanate, the polyol is selected from the group consisting of polyoxyalkylene diols, polyoxyalkylene triols, polytetramethylene glycols, polycaprolactone diols, and polycaprolactone triols, and the catalyst is selected from the group consisting of dialkyltin dicarboxylates, tertiary amines, and stannous salts of carboxylic acids.

32. A process according to claim 31 wherein the isocyanate is 4,4'-diphenylmethane diisocyanate, the polyol is a polypropylene glycol having an equivalent weight of between 250 and 6000, and the catalyst is dibutyltin dilaurate.

33. A sealant comprising an aminosilane end-capped urethane polymer prepared according to the process of claim 28, a calcium carbonate filler having a particle size of from about 0.07 to 1 micron, and a catalyst selected from the group consisting of dialkyltin dicarboxylates, tertiary amines, and stannous salts of carboxylic acids.

## Patentansprüche

1. Arylaminoisobutylsilanverbindung der Formel
Ar-NHCH₂CH(CH₃)CH₂Si(CH₃)(OR)₂
worin Ar eine Arylgruppe ist und R eine C₁-C₆-Alkylgruppe ist.

2. Verbindung gemäß Anspruch 1, wobei die Ar-Gruppe gewählt ist aus der aus Phenyl, Naphthyl, Tolyl, Styryl und Mischungen davon bestehenden Gruppe.

3. Verbindung gemäß Anspruch 2, wobei die Ar-Gruppe eine Phenylgruppe ist.

4. Verbindung gemäß Anspruch 1, wobei die R-Gruppe eine C₁-C₄-Alkylgruppe ist.

5. Verbindung gemäß Anspruch 3, wobei die R-Gruppe gewählt ist aus der aus einer Methylgruppe und einer Ethylgruppe bestehenden Gruppe.

6. Polymer, hergestellt durch Umsetzen eines Isocyanat-haltigen Polyurethan-Prepolymeren mit einer Verbindung gemäß Anspruch 1.

7. Polymer, hergestellt durch Umsetzen eines Isocyanat-terminierten Polyurethan-Prepolymeren mit einer Verbindung gemäß Anspruch 1.

8. Polymer gemäß Anspruch 6, wobei das Prepolymer hergestellt wird durch Umsetzen eines organischen Di- oder Polyisocyanats mit einem Polyol oder einer Kombination von Polyolen in Gegenwart eines Katalysators.

9. Polymer gemäß Anspruch 8, wobei das Isocyanat ein Diisocyanat ist und das Polyol ein Molekulargewicht zwischen 500 und 12 000 aufweist.

10. Polymer gemäß Anspruch 9, wobei das Isocyanat gewählt wird aus der aus 2,4-Toluoldiisocyanat, 2,6-Toluoldiisocyanat, 4,4'-Diphenylmethandiisocyanat, Isophorondiisocyanat und Dicyclohexylmethan-4,4'-diisocyanat bestehenden Gruppe.

11. Polymer gemäß Anspruch 10, wobei das Isocyanat 4,4'-Diphenylmethandiisocyanat ist.

12. Polymer gemäß Anspruch 9, wobei das Polyol gewählt wird aus der aus Polyoxyalkylendiolen, Polyoxyalkylentriolen, Polytetramethylenglykolen, Polycaprolactondiolen und Polycaprolactontriolen bestehenden Gruppe.

13. Polymer gemäß Anspruch 11, wobei das Polyol ein Polypropylenglykol mit einem Äquivalentgewicht zwischen 250 und 6 000 ist.

14. Polymer gemäß Anspruch 8, wobei das Prepolymer hergestellt wird durch Umsetzen eines organischen Triisocyanats mit einem Polyol oder einer Kombination von Polyolen in Gegenwart eines Katalysators.

15. Polymer gemäß Anspruch 14, wobei das Triisocyanat das Reaktionsprodukt von 3 Mol Hexamethylendiisocyanat und 1 Mol Wasser ist.

16. Polymer gemäß Anspruch 9, wobei der Katalysator gewählt wird aus der aus Dialkylzinndicarboxylaten, tertiären Aminen und Zinn(II)-Salzen von Carbonsäuren bestehenden Gruppe.

17. Polymer gemäß Anspruch 16, wobei der Katalysator Dibutylzinndilaurat ist.

18. Vulkanisierbares Arylaminoalkylsilan-endverkapptes Polyurethanpolymer, umfassend das Reaktionsprodukt eines Isocyanat-terminierten Polyurethan-Prepolymeren und eines Silans der Formel
Ar-NHCH₂CH(CH₃)CH₂Si(CH₃)(OR)₂
worin Ar eine Arylgruppe ist, die aus der aus Phenyl, Naphthyl, Tolyl, Styryl und Mischungen davon bestehenden Gruppe gewählt wird und R eine C₁-C₆-Alkylgruppe ist.

19. Polymer gemäß Anspruch 18, wobei die Ar-Gruppe eine Phenylgruppe ist und die R-Gruppe eine C₁-C₄-Alkylgruppe ist.

20. Polymer gemäß Anspruch 18, wobei das Silan gewählt wird aus der aus N-Phenylaminoisobutyldimethoxymethylsilan und N-Phenylaminoisobutylmethyldiethoxysilan bestehenden Gruppe.

21. Polymer gemäß Anspruch 18, wobei das Prepolymer hergestellt wird durch das Umsetzen eines organischen Diisocyanats mit einem Polyol oder einer Kombination von Polyolen mit einem Molekulargewicht von 500 bis 12 000 in Gegenwart eines Katalysators.

22. Polymer gemäß Anspruch 21, wobei das Isocyanat gewählt wird aus der aus 2,4-Toluoldiisocyanat, 2,6-Toluoldiisocyanat, 4,4'-Diphenylmethandiisocyanat, Isophorondiisocyanat und Dicyclohexylmethan-4,4'-diisocyanat bestehenden Gruppe, das Polyol gewählt wird aus der aus Polyoxyalkylendiolen, Polyoxyalkylentriolen, Polytetramethylenglykolen, Polycaprolactondiolen und Polycaprolactontriolen bestehenden Gruppe und der Katalysator gewählt wird aus der aus Dialkylzinndicarboxylaten, tertiären Aminen und Zinn(II)-Salzen von Carbonsäuren bestehenden Gruppe.

23. Polymer gemäß Anspruch 22, wobei das Isocyanat 4,4'-Diphenylmethandiisocyanat ist, das Polyol Polypropylenglykol mit einem Äquivalentgewicht von 250 bis 6 000 ist und der Katalysator Dibutylzinndilaurat ist.

24. Dichtungsmasse, umfassend ein Polymer gemäß Anspruch 18 und ferner umfassend einen Calciumcarbonat-Füllstoff und einen Katalysator.

25. Dichtungsmasse gemäß Anspruch 24, wobei der Calciumcarbonat-Füllstoff eine Teil-chengröße von etwa 0,05 bis etwa 10 µm aufweist.

26. Dichtungsmasse gemäß Anspruch 24, wobei der Katalysator gewählt wird aus der aus Dialkylzinndicarboxylaten, tertiären Aminen und Zinn(II)-Salzen von Carbonsäuren bestehenden Gruppe.

27. Dichtungsmasse gemäß Anspruch 26, wobei der Katalysator Dibutylzinndilaurat ist.

28. Verfahren zur Herstellung eines vulkanisierbaren, Arylaminosilan-endverkappten Ure-thanpolymeren, umfassend das Umsetzen eines Isocyanat-haltigen Polyurethan-Prepolymeren und eines Silans der Formel
Ar-NHCH₂CH(CH₃)CH₂Si(CH₃)(OR)₂
worin Ar eine Arylgruppe und R eine C₁-C₆-Alkylgruppe ist.

29. Verfahren gemäß Anspruch 18, wobei die Ar-Gruppe gewählt wird aus der aus Phenyl, Naphthyl, Tolyl, Styryl und Mischungen bestehenden Gruppe und die R-Gruppe eine C₁C₄-Alkylgruppe ist.

30. Verfahren gemäß Anspruch 29, wobei das Prepolymer hergestellt wird durch Umsetzen eines organischen Diisocyanats mit einem Polyol oder einer Kombination von Polyolen mit einem Molekulargewicht von 500 bis 12 000 in Gegenwart eines Katalysators.

31. Verfahren gemäß Anspruch 30, wobei das Isocyanat gewählt wird aus der aus 2,4Toluoldiisocyanat, 2,6-Toluoldiisocyanat, 4,4'-Diphenylmethandiisocyanat, Isophorondiisocyanat und Dicyclohexylmethan-4,4'-diisocyanat bestehenden Gruppe, das Polyol gewählt wird aus der aus Polyoxyalkylendiolen, Polyoxyalkylentriolen, Polytetramethy-lenglykolen, Polycaprolactondiolen und Polycaprolactontriolen bestehenden Gruppe und der Katalysator gewählt wird aus der aus Dialkylzinndicarboxylaten, tertiären Aminen und Zinn(II)-Salzen von Carbonsäuren bestehenden Gruppe.

32. Verfahren gemäß Anspruch 31, wobei das Isocyanat 4,4'-Diphenylmethandiisocyanat ist, das Polyol Polypropylenglykol mit einem Äquivalentgewicht von 250 bis 6 000 ist und der Katalysator Dibutylzinndilaurat ist.

33. Dichtungsmasse, umfassend ein Aminosilan-endverkapptes Urethanpolymer, hergestellt gemäß dem Verfahren von Anspruch 28, einen Calciumcarbonat-Füllstoff mit einer Teil-chengröße von etwa 0,07 bis 1 µm und einen Katalysator, gewählt aus der aus Dialkyl-zinndicarboxylaten, tertiären Aminen und Zinn(II)-Salzen von Carbonsäuren bestehenden Gruppe.

## Revendications

1. Arylaminoisobutylsilane de formule
Ar-NHCH₂CH(CH₃) CH₂Si(CH₃) (OR)₂
dans laquelle Ar représente un groupe aryle et R représente un groupe alkyle en C₁ à C₆.

2. Composé suivant la revendication 1, dans lequel le groupe Ar est choisi dans le groupe consistant en les groupes phényle, naphtyle, tolyle, styryle et leurs mélanges.

3. Composé suivant la revendication 2, dans lequel le groupe Ar est un groupe phényle.

4. Composé suivant la revendication 1, dans lequel le groupe R est un groupe alkyle en C₁ à C₄.

5. Composé suivant la revendication 3, dans lequel le groupe R est choisi dans le groupe consistant en un groupe méthyle et un groupe éthyle.

6. Polymère préparé en faisant réagir un prépolymère de polyuréthanne à fonction isocyanate avec un composé suivant la revendication 1.

7. Polymère préparé en faisant réagir un prépolymère de polyuréthanne à terminaison isocyanate avec un composé suivant la revendication 1.

8. Polymère suivant la revendication 6, dans lequel le prépolymère est préparé en faisant réagir un di- ou polyisocyanate organique avec un polyol ou une association de polyols en présence d'un catalyseur.

9. Polymère suivant la revendication 8, dans lequel l'isocyanate est un diisocyanate et le polyol a un poids moléculaire compris dans l'intervalle de 500 à 12 000.

10. Polymère suivant la revendication 9, dans lequel l'isocyanate est choisi dans le groupe consistant en 2,4-toluène-diisocyanate, 2,6-toluène-diisocyanate, 4,4'diphénylméthane-diisocyanate, isophorone-diisocyanate et dicyclohexylméthane-4,4'-diisocyanate.

11. Polymère suivant la revendication 10, dans lequel l'isocyanate consiste en 4,4'-diphénylméthanediisocyanate.

12. Polymère suivant la revendication 9, dans lequel le polyol est choisi dans le groupe consistant en polyoxyalkylènediols, polyoxyalkylènetriols, polytétraméthy-lèneglycols, polycaprolactonediols et polycaprolactone-triols.

13. Polymère suivant la revendication 11, dans lequel le polyol est un polypropylèneglycol ayant un poids équivalent compris dans l'intervalle de 250 à 6000.

14. Polymère suivant la revendication 8, dans lequel le prépolymère est préparé en faisant réagir un triisocyanate organique avec un polyol ou une association de polyols en présence d'un catalyseur.

15. Polymère suivant la revendication 14, dans lequel le triisocyanate est le produit de réaction de trois moles d'hexaméthylène-diisocyanate et d'une mole d'eau.

16. Polymère suivant la revendication 9, dans lequel le catalyseur est choisi dans le groupe consistant en dicarboxylates de dialkylétain, amines tertiaires et sels stanneux d'acides carboxyliques.

17. Polymère suivant la revendication 16, dans lequel le catalyseur consiste en dilaurate de dibutylétain.

18. Polymère consistant en polyuréthanne à coiffe terminale arylaminoalkylsilane vulcanisable, comprenant le produit de réaction d'un prépolymère de polyuréthanne à terminaison isocyanate et d'un silane de formule
Ar-NHCH₂CH(CH₃)CH₂Si(CH₃) (OR)₂
dans laquelle Ar représente un groupe aryle choisi dans le groupe consistant en les groupes phényle, naphtyle, tolyle, styryle et leurs mélanges, et R représente un groupe alkyle en C₁ à C₆.

19. Polymère suivant la revendication 18, dans lequel le groupe Ar est un groupe phényle et le groupe R est un groupe alkyle en C₁ à C₄.

20. Polymère suivant la revendication 18, dans lequel le silane est choisi dans le groupe consistant en Nphénylamino-isobutyldiméthoxyméthylsilane et N-phénylaminoisobutylméthyldiéthoxysilane.

21. Polymère suivant la revendication 18, dans lequel le prépolymère est préparé en faisant réagir un diisocyanate organique avec un polyol ou une association de polyols ayant un poids moléculaire compris dans l'intervalle de 500 à 12 000 en présence d'un catalyseur.

22. Polymère suivant la revendication 21, dans lequel l'isocyanate est choisi dans le groupe consistant en 2,4-toluène-diisocyanate, 2,6-toluène-diisocyanate, 4,4'diphénylméthane-diisocyanate, isophorone-diisocyanate et dicyclohexylméthane-4,4'-diisocyanate, le polyol est choisi dans le groupe consistant en polyoxyalkylènediols, polyoxyalkylènetriols, polytétraméthylèneglycols, polycaprolactonediols, et polycaprolactonetriols, et le catalyseur est choisi dans le groupe consistant en dicarboxylates de dialkylétain, amines tertiaires et sels stanneux d'acides carboxyliques.

23. Polymère suivant la revendication 22, dans lequel l'isocyanate consiste en 4,4'-diphénylméthanediisocyanate, le polyol est un polypropylèneglycol ayant un poids équivalent compris dans l'intervalle de 250 à 6000 et le catalyseur consiste en dilaurate de dibutylétain.

24. Agent d'étanchéité comprenant un polymère suivant la revendication 18 et comprenant en outre une charge consistant en carbonate de calcium et un catalyseur.

25. Agent d'étanchéité suivant la revendication 24, dans lequel la charge consistant en carbonate de calcium a un diamètre de particules compris dans l'intervalle d'environ 0,05 à environ 10 micromètres.

26. Agent d'étanchéité suivant la revendication 24, dans lequel le catalyseur est choisi dans le groupe consistant en dicarboxylates de dialkylétain, amines tertiaires et sels stanneux d'acides carboxyliques.

27. Agent d'étanchéité suivant la revendication 26, dans lequel le catalyseur consiste en dilaurate de dibutylétain.

28. Procédé pour la production d'un polymère d'uréthanne à coiffe terminale arylaminosilane vulcanisable, comprenant la réaction d'un prépolymère de polyuréthanne à fonction isocyanate et d'un silane de formule
Ar-NHCH₂CH (CH₃) CH₂Si(CH₃) (OR)₂
dans laquelle Ar représente un groupe aryle et R représente un groupe alkyle en C₁ à C₆.

29. Procédé suivant la revendication 18, dans lequel le groupe Ar est choisi dans le groupe consistant en les groupes phényle, naphtyle, tolyle, styryle et leurs mélanges, et le groupe R est un groupe alkyle en C₁ à C₄.

30. Procédé suivant la revendication 29, dans lequel le prépolymère est préparé en faisant réagir un diisocyanate organique avec un polyol ou une association de polyols ayant un poids moléculaire compris dans l'intervalle de 500 à 12 000 en présence d'un catalyseur.

31. Procédé suivant la revendication 30, dans lequel l'isocyanate est choisi dans le groupe consistant en 2,4-toluène-diisocyanate, 2,6-toluène-diisocyanate, 4,4'diphénylméthane-diisocyanate, isophorone-diisocyanate et dicyclohexylméthane-4,4'-diisocyanate, le polyol est choisi dans le groupe consistant en polyoxyalkylènediols, polyoxyalkylènetriols, polytétraméthylèneglycols, polycaprolactonediols, et polycaprolactonetriols, et le catalyseur est choisi dans le groupe consistant en dicarboxylates de dialkylétain, amines tertiaires et sels stanneux d'acides carboxyliques.

32. Procédé suivant la revendication 31, dans lequel l'isocyanate consiste en 4,4'-diphénylméthanediisocyanate, le polyol est un polypropylèneglycol ayant un poids équivalent compris dans l'intervalle de 250 à 6000 et le catalyseur consiste en dilaurate de dibutylétain.

33. Agent d'étanchéité comprenant un polymère d'uréthanne à coiffe terminale aminosilane préparé par le procédé suivant la revendication 28, une charge consistant en carbonate de calcium ayant un diamètre de particules compris dans l'intervalle d'environ 0,07 à 1 micromètre, et un catalyseur choisi dans le groupe consistant en dicarboxylates de dialkylétain, amines tertiaires et sels stanneux d'acides carboxyliques.
